# EUROPEAN PATENT APPLICATION

(11) **EP 4 764 442 A1**
(43) Date of publication of application: **24.06.2026**
(21) Application number: 24221439.3
(22) Date of filing: 19.12.2024
(51) Int. Cl.: G01M 3/24, F17D 5/06, G01F 15/00, G06N 3/02

(54) **WATER METER WITH LEAK DETECTION**

(71) Applicant: Kamstrup A/S, 8660 Skanderborg (DK)
(72) Inventor: Kristensen, Mick Althoff, 8660 Skanderborg (DK); Dupont, Sune Hoveroust, 8660 Skanderborg (DK)
(74) Representative: Plougmann Vingtoft a/s

(57) **Abstract**

A water meter including acoustic transducers arranged to make an acoustic signal recording of acoustic signals propagating in the flow tube of the water meter. The water meter is arranged to receive a pre-trained machine learning model from an external system via a communication interface. The pre-trained machine learning model has been trained on multiple training acoustic signal recordings where of the multiple training acoustic signal recordings include acoustic signals originating from a leak in a water distribution system. The water meter is arranged to with intervals make an acoustic signal recording of the acoustic signals in the flow tube and input the acoustic signal recording to the pre-trained machine learning model to generate an output indicative of the acoustic signal recording including acoustic signals originating from a leak in the water distribution system.

## Description

### FIELD OF THE INVENTION

The present invention relates to utility meters and metering systems comprising machine learning models for detection of anomalies in the utility distribution networks.

### BACKGROUND OF THE INVENTION

Artificial Intelligence (AI) and Machine Learning (ML) have already been shown to be powerful tools in numerous applications. Embedding AI and ML models in battery operated utility meters is desired. This will enhance the computational capabilities of utility meters remarkably. However, creating functional AI models requires solid data and massive data processing and is therefore not straight forward in limited applications where data cannot easily be collected and processed. Utility meters are such limited applications due to limited available energy for data communication and data processing. It is desired to enable the use of AI and ML models in utility meters which are designed to be operated for several years without a battery change

In metering (heat, water, gas) data communication is often powered by an embedded power source, in the form of a battery. State-of-the-art meters provide communication where hourly data values are provided to a metering system. This is insufficient for creating AI / ML models on the underlying behavior of consumption or temperature, a resolution in the sub-minute or even second scale is needed. This is a large bottleneck in collecting the needed data for building advanced AI / ML models. Furthermore, data is needed from many meters and not just long-time data from a single meter, since a model based on multiple meters will work better on a random ensample.

Especially applications such as Acoustic Leak Detection (ALD), disaggregation of data and heat loss analysis can benefit from ML / AI models. Transmission of data, with sufficient temporal resolution for training and execution of AI / ML models, from the utility meters consumes a high amount of energy and severely limits the use of ML/ AI models for such applications.

Meter devices are typically battery-powered, and consequently have a finite amount of energy available for their service cycle. Because a service cycle for meter devices of typically 10-20 years is desirable to reduce total cost of ownership, energy conservation is a major design criterion. Consequently, methods for efficiently gathering data for training and execution of ML / AI models are desired as well as methods for minimizing the need for transmission of data between meters and metering systems.

Hence, an improved method for utilizing ML and AI in metering applications would be advantageous, and in particular a utility meter optimized for utilizing ML and AI would be advantageous.

### OBJECT OF THE INVENTION

In particular, it may be seen as an object of the present invention to provide a water meter and a method for detection of leaks in a water distribution system that solves the above-mentioned problems.

### SUMMARY OF THE INVENTION

Thus, the above described object and several other objects are intended to be obtained in a first aspect of the invention by providing a water meter comprising: -a flow tube arranged for being mechanically connected to a water distribution system; -one or more flow transducers arranged for measuring a flow of water through the flow tube; -one or more acoustic transducers arranged to make an acoustic signal recording of acoustic signals propagating in the flow tube; -a memory for storing a machine learning model; -a processor unit for executing the machine learning model; and -one or more communication interfaces for communication with at least one system external to the water meter, characterized in that: -the water meter is arranged to receive via the one or more communication interfaces, from an external manufacturing system or an external metering system, a pre-trained machine learning model, where -the pre-trained machine learning model has been trained to discriminate acoustic signal recordings including acoustic signals originating from a leak in the water distribution system from acoustic signal recordings not including acoustic signals originating from a leak in the water distribution system, and where -the pre-trained machine learning model has been trained on multiple training acoustic signal recordings, and where -at least some of the multiple training acoustic signal recordings include and are labelled as including acoustic signals originating from a leak in a water distribution system and the remaining training acoustic signal recordings do not include acoustic signals originating from a leak in a water distribution system; - and the water meter is further arranged to with regular or irregular intervals make an acoustic signal recording of the acoustic signals propagating in the flow tube and input the acoustic signal recording to the pre-trained machine learning model to generate an output indicative of the acoustic signal recording including acoustic signals originating from a leak in the water distribution system.

The invention is advantageous in that the water meter is arranged for receiving a pre-trained ML model. Consequently, the water meter does not need to use energy from a scarce energy source for collecting and organizing training data in the form of training acoustic signal recordings or for training the model based on the training data. Further, the water meter does not need to comprise memory for storing training data or processing capabilities for training the model. A further advantage is that the water meter does not need to collect and handle training data from multiple meters or to analyse and label the training data according to the acoustic signals included in the training data. The data transfer of training data and training of the AI / ML model in the water meter would have a significant influence on the energy consumption of the water meter. Further, due to the executable AI / ML model embedded in the water meter, acoustic signal recordings do not need to be transferred from the water meter to a metering system for processing by the AI / ML model. It will be sufficient to transfer the output of the AI / ML model to the metering system which will also be energy conserving.

The skilled person will understand that the invention according to the first aspect of the invention is applicable for other types of utility meters or consumption meters such as flow meters, gas meters, energy meters, heat cost allocators, district heating meters or similar utility meters or consumption meters.

The one or more communication interfaces may be wired or wireless communication interfaces such as interfaces for programming or configuring memory or microcontrollers during production. Further, at least one of the one or more communication interfaces may be interfaces for communication with deployed water meters via a meter reading infrastructure / meter reading system such as MBus, wireless MBus, Bluetooth Low Energy (BLE), LoRa, Sigfox, proprietary infrastructure or other suitable communication infrastructures. Preferably, the communication interfaces are arranged for two-way communication. Optionally, at least one of the one or more communication interfaces may be a cellular communication interfaces such as interfaces arranged for supporting NB-IoT, LTE cat. M1, LTE cat 1 or any other LTE communication mode or any other cellular communication such as 2G, 3G, 4G, 5G or 5G RedCap. Preferably, the water meter according to the first aspect of the invention comprises at least one communication interface for receiving or programming or configuring the pre-trained ML model in a production environment and/or at least one other communication interface for receiving or programming or configuring the pre-trained ML model after the meter being installed or deployed.

The external manufacturing system may be any system for controlling the programming or configuration of memory or microcontrollers during production. The external metering system may be any system for controlling and/or handling the transmission of consumption data and optionally for at least partly updating the pre-trained ML model in a deployed water meter such as a meter data management system, a metering system a head end system or any other system or a collection of systems. The external manufacturing system and/or the external metering system are systems external to the water meter. In other words, the external manufacturing system and/or the external metering system are executed by a processor external to the water meter and/or resides in an environment outside the water meter such as in a server or cloud solution.

Optionally the water meter comprises an energy source such as a battery and/or an energy harvesting module such as a Peltier element or a photovoltaic element.

Optionally the ML model in the water meter is a static machine learning model i.e. the machine learning model in the water meter is not updated based on the operation or execution of the ML model in the water meter. Optionally, the water meter is arranged to only update, change or modify the ML model by receiving an updated pre-trained ML model from an external system. In other words, the water meter may be arranged not to train the ML model in the water.

It is understood by the skilled person that the one or more acoustic transducers arranged to make an acoustic signal recording of acoustic signals propagating in the flow tube may also make an acoustic signal recording of acoustic signals propagating in a fluid in the flow tube.

Optionally the water meter according to the first aspect of the invention is arranged such that one or more of the flow transducers are also used as acoustic transducers. Optionally, the one or more acoustic transducers is/are arranged at the flow tube such as on an outer surface of the flow tube. Preferably, the one or more acoustic transducers are arranged to make an acoustic signal recording of acoustic signals propagating in the water distribution system and/or the flow tube. The water distribution system is understood to include pipes before and after the water meter with respect to the direction of flow. This means that pipes at the consumption site e.g. at the premises of a consumer may also be considered part of the water distribution system.

Optionally the water meter according to the first aspect of the invention is arranged such that the output from the pre-trained machine learning model comprises a value proportional to a probability of the acoustic signal recording including an acoustic signal originating from a leak in the water distribution system and/or a value proportional to a probability of the acoustic signal recording including an acoustic signal originating from an ambient noise source. Such an output is advantageous because it can be represented using limited data such as one or two bytes which minimizes energy for transmission of the result form the water meter to a metering system. Further, the output may, in a metering system, be compared to and combined to results from neighbouring water meters to achieve an even more precise or reliable detection of leaks. In other words, the pre-trained machine learning model may be said to generate an output indicative of whether the acoustic signal recording includes acoustic signals originating from a leak in the water distribution system. An ambient noise source is understood to be a noise source other than a leak in the water distribution system. An ambient noise source may be a device generating mechanical vibrations or acoustic noise in the water distribution system when operating. Examples of ambient sources are a pump, a boiler, a district heating system, a heat pump, a water softener or other sources.

Optionally at least some of the training acoustic signal recordings include an acoustic signal originating from a leak in a water distribution system and/or an ambient noise source such as a pump, a boiler, a district heating system, a heat pump, a water softener or other sources. Preferably, the training acoustic signal recordings comprise a label describing the source of the acoustic signal as a leak in a water distribution system or as an ambient noise source or optionally as a noise source other than a leak in a water distribution system. Preferably, some of the training acoustic signal recordings include an acoustic signal originating from an ambient noise source such as a pump, a boiler, a district heating system, a heat pump, a water softener or other sources and are labelled as including an ambient noise source or labelled with the specific noise source. This has the advantage that the ML model may be trained to detect specific types of noise sources. Further, some of the training acoustic signal recordings may include an acoustic signal originating from an isolated ambient noise source such as a pump, a boiler, a district heating system, a heat pump, a water softener or other sources.

Optionally, for the water meter according to the first aspect of the invention the pre-trained machine learning model has been trained on at least 100, preferably at least 500 training acoustic signal recordings from flow tubes or pipes of water distribution systems. Optionally at least 25%, preferably at least 35% or even more preferably at least 50% or most preferably 40-60% of the training acoustic signal recordings include and are marked as including acoustic signals originating from a leak in a water distribution system and the remaining acoustic signal recordings do not include and are not marked as including acoustic signals originating from a leak in a water distribution system. The multiple training acoustic signal recordings may optionally have a uniform size and be recorded with the same sampling rate or be up or down sampled to have the same sampling rate.

Optionally, the machine learning model according to the first aspect of the invention is configured to classify the acoustic signal recordings as including an acoustic signal originating from one or more classes of sources such as leaks, ambient noise, valves, pumps, boilers, district heating systems, heat pumps, water softeners or other ambient sources. Optionally the classification is comprised in the output from the pre-trained machine learning model.

The water meter may further comprise one or more of an analogue to digital converter, a signal amplifier / programmable gain amplifier, an antialiasing filter or a memory arranged to make an acoustic signal recording of acoustic signals propagating in the flow tube along with the one or more acoustic transducers. The acoustic signal recording may be controlled by the processor or another microcontroller. The acoustic signal recordings as well as the training acoustic signals recordings may all be digital acoustic signal recordings / digital training acoustic signals recordings respectively.

Optionally the water meter according to the first aspect of the invention is arranged to make acoustic signal recordings with regular or irregular intervals, where the acoustic signal recordings comprise less than 2000 samples and is sampled with a sampling rate of less than 6000 Hz. This limitation of the sampling time and the sampling rate is advantageous in that energy consumption for the recording process is limited while at the same time a recording which is sufficient for the purpose is made. Optionally the water meter according to the first aspect of the invention is arranged to modify the acoustic signal recording by extrapolation or interpolation to match the machine learning model.

Optionally the water meter according to the first aspect of the invention is arranged to make acoustic signal recordings with regular or irregular intervals of acoustic signals in a frequency range below 2 kHz. The water meter may comprise a filter for attenuating acoustic signals in a frequency range above 2kHz.

Optionally the water meter according to the first aspect of the invention is arranged to store meta data along with the acoustic signal recording or the output from the pre-trained machine learning model, where the meta data is one or more of a timestamp indicating the time of recording the acoustic signal, a flow rate during the acoustic signal recording, a temperature during the acoustic signal recording, the total signal energy of the acoustic signal recording, an FFT analysis of the acoustic signal recording, second or third statistical moment the acoustic signal recording, a fluid pressure during the acoustic signal recording.

Optionally the water meter according to the first aspect of the invention may be arranged to transmit the output of the machine learning model and/or the acoustic signal recording and/or the meta data to a system external to the water meter or where the water meter is further arranged to transmit the output of the machine learning model and/or the acoustic signal recording and/or the meta data to a system external to the water meter if the output of the machine learning model exceeds a threshold.

Transmission of the output from the machine learning model and/or transmission of the abovementioned meta data to a system external to the water meter has the advantage that the system may use the received information to alert service providers or consumers in case of an anomaly such as a leak. Further, the system may combine data received from a plurality of water meters whereby an extended analysis may be performed at the system and an output with a lower error rate or a more reliable output may be generated.

Optionally the water meter according to the first aspect of the invention may further be arranged to calculate the total energy for each of a plurality of acoustic signal recordings and to select the acoustic signal recording with the lowest total energy or to select an acoustic signal recording from a group of the 50%, or preferably 25% or more preferably 10% of the plurality of acoustic signal recordings with the lowest total energy, and to input the selected acoustic signal recording to the pre-trained machine learning model to generate an output indicative of the selected acoustic signal recording including acoustic signals originating from a leak in the water distribution system.

Since the energy of acoustic signals generated from a leak in the distribution system is normally expected to be almost constant selecting from the plurality of acoustic signal recordings the acoustic signal recording with a lowest total energy has the effect of selecting a record which comprises a low level of signal from ambient sources i.e. other sources than a leak. Hereby the detection of leaks becomes more reliable.

Optionally the water meter according to the first aspect of the invention is further arranged to calculate the total energy for each of a plurality of acoustic signal recordings and to select the acoustic signal recording with the lowest total energy or to select an acoustic signal recording from the group of the 50% or preferably 25% or more preferably 10% of the plurality of acoustic signal recordings with the lowest total energy, and if the calculated total energy of the selected acoustic signal recording is above an analysis threshold to input the selected acoustic signal recording to the pre-trained machine learning model to generate an output indicative of the selected acoustic signal recording including acoustic signals originating from a leak in the water distribution system This is advantageous since the acoustic signal recording with the lowest total energy has turned out to typically represent a recording made at a time point where ambient noise sources such as pumps are switched off or at times of low consumption. Consequently, acoustic signals originating from a leak in the distribution system tends to be the dominant acoustical signal in such an acoustic signal recording. Further, the analysis threshold is advantageous to avoid using energy for inference by the ML model on acoustic signal recordings which are with very unlikely to comprise acoustic signals from a leak, due to a very low energy level which may indicate that any signals in the recording are below the noise floor.

Preferably the water meter is further arranged to calculate the analysis threshold at least partly based on a number of historic analysis thresholds and / or a number of historic total energy calculations. Alternatively, the analysis threshold may be predetermined or the water meter is arranged to receive the analysis threshold from the metering system.

Optionally the water meter according to the first aspect of the invention is arranged to receive via one of the one or more communication interfaces parameters for partly updating the pre-trained machine learning model. Preferably the pre-trained machine learning model is received from an external system in the form of a configuration system, a manufacturing system, a metering system or a meter reading system.

It is understood by the skilled person that any of the optional or preferred features mentioned above in relation to the first aspect of the invention may be combined with the second aspect of the invention either alone or in combination with one or more other optional or preferred features.

In a second aspect of the invention is provided a method for detecting leaks in one or more water distribution systems comprising a plurality of pipes for distributing water to a plurality of consumption sites, a plurality of water meters arranged for measuring water consumption at the plurality of consumption sites, a metering system for handling data from the water meters and a meter reading system arranged to provide a communication channel between the plurality of water meters and the metering system, said water meters each comprising: -a flow tube mechanically connected to a pipe of the water distribution system; -one or more flow transducers arranged for measuring a flow of water through the flow tube; -one or more acoustic transducers arranged to make an acoustic signal recording of acoustic signals propagating in the flow tube, -a memory for storing a machine learning model; -a processor unit for executing the machine learning model; and -one or more communication interfaces for communication with the meter reading system and/or one or more systems external to the water meter, the method comprising the steps of: -recording in one or more of the plurality of water meters, with regular or irregular intervals, an acoustic signal recording of the acoustic signals propagating in the flow tube; - transmitting from the plurality of water meters of the one or more water distribution systems to the metering system via the meter reading system a plurality of acoustic signal recordings; - determining that some of the acoustic signal recordings received in the metering system do include acoustic signals originating from a leak in a water distribution system, labelling the acoustic signal recording accordingly and including the acoustic signal recording in an acoustic signal training set; -determining that some of the acoustic signal recordings received in the metering system do not include acoustic signals originating from a leak in a water distribution system, labelling the acoustic signal recording accordingly and including the acoustic signal recording in the acoustic signal training set; -training in the metering system a machine learning model on the acoustic signal training set to discriminate acoustic signal recordings including acoustic signals originating from a leak in the water distribution system from acoustic signal recordings not including acoustic signals originating from a leak in the water distribution system whereby a pre-trained machine learning model is obtained; -transmitting to at least a part of the plurality of water meters, via the one or more communication interfaces, from an external manufacturing system or an external metering system, the pre-trained machine learning model; - in the water meter inputting one or more acoustic signal recordings to the pre-trained machine learning model and generating an output indicative of the acoustic signal recording including acoustic signals originating from a leak in the water distribution system.

The invention according to the second aspect is advantageous in that acoustic signal recordings are collected from the plurality of water meters and used for training a machine learning (ML) model at the system. Consequently, the water meter does not need to use energy from a limited energy source for collecting and organizing training data in the form of training acoustic signal recordings or for training the model based on the training data. Further, the water meter does not need to comprise memory for storing training data or processing capabilities for training the ML model. A further advantage is that the water meter does not need to collect and handle training data from multiple other water meters or to analyse and label the training data according to the acoustic signals included in the training data. A further advantage is that the labelling in the system may include interaction from a specialist or another user in order to label the training data correct. It is a further advantage that training data may be collected from a plurality of different water distribution systems whereby the ML model is enriched during training and will have an improved performance.

The skilled person will know that the invention according to the second aspect of the invention is applicable for other types of utility meters or consumption meters such as gas meters, energy meters, heat cost allocators, district heating meters or similar utility or consumption meters. Further, the invention according to the second aspect of the invention may be combined with any optional or preferred features of the first aspect of the invention.

The external manufacturing system may be any system for controlling the programming or configuration of memory or microcontrollers during production. The external metering system may be any system for controlling and/or handling the transmission of data for at least partly updating the pre-trained ML model in a deployed water meter such as a meter data management system, a metering system a head end system or any other system or a collection of systems. The external manufacturing system and/or the external metering system are systems external to the water meter. In other words, the external manufacturing system and/or the external metering system are executed by a processor external to the water meter and/or resides in an environment outside the water meter such as in a server or cloud solution. The ML model is trained in the external metering system outside the water meter. In other words, the ML model is trained outside or externally from the water meter.

Optionally the output from the pre-trained machine learning model in the method according to the second aspect of the invention is a value proportional to a probability of the acoustic signal recording including an acoustic signal originating from a leak in the water distribution system and/or a value proportional to a probability of the acoustic signal recording including an acoustic signal originating from an ambient noise source.

Optionally the acoustic signal training set in the method according to the second aspect of the invention comprises an acoustic signal recording including an acoustic signal originating from a leak in the water distribution system and/or an ambient noise source such as a pump, a boiler, a district heating system, a heat pump, a water softener or other sources.

Optionally the acoustic signal training set in the method according to the second aspect of the invention comprises an acoustic signal recording including an acoustic signal originating from a leak in the water distribution system and/or an ambient noise source such as a pump, a boiler, a district heating system, a heat pump, a water softener or other sources and is labelled as including a leak or an ambient noise source or optionally labelled with the specific noise source.

Optionally the acoustic signal training set in the method according to the second aspect of the invention comprises a plurality of acoustic signal recordings including an acoustic signal originating from an isolated ambient noise source such as a pump, a boiler, a district heating system, a heat pump, a water softener or other sources.

Optionally the acoustic signal training set in the method according to the second aspect of the invention comprises at least 100, preferably at least 500 training acoustic signal recordings from flow tubes or pipes of water distribution systems. Optionally at least 25%, preferably at least 35% or even more preferably at least 50% or most preferably 40-60% of the training acoustic signal recordings include and are marked as including acoustic signals originating from a leak in the water distribution system and the remaining acoustic signal recordings do not include and are not marked as including acoustic signals originating from a leak in the water distribution system.

Optionally the machine learning model in the method according to the second aspect of the invention is configured to classify the acoustic recordings as originating from one or more classes of sources such as leaks in the water distribution system, ambient noise, valves, pumps, boilers, district heating systems, heat pumps, water softeners or other ambient sources.

Optionally the acoustic signal recording in the method is made with regular or irregular intervals by the water meter comprises less than 1000 samples and is sampled with a sampling rate of less than 4000 Hz.

Optionally the method according to the second aspect of the invention comprises a step wherein the water meter is arranged to modify the acoustic signal recording by extrapolation or interpolation to match the machine learning model.

Optionally the method according to the second aspect of the invention may further comprise a step of storing in the water meter meta data along with the acoustic signal recording or along with the output from the pre-trained machine learning model, where the meta data is one or more of a timestamp indicating the time of recording the acoustic signal, a flow rate during the acoustic signal recording, a temperature during the acoustic signal recording, the total signal energy of the acoustic signal recording, an FFT analysis of the acoustic signal recording, a first, second or third statistical moment of the acoustic signal recording or a fluid pressure during the acoustic signal recording.

The water meter in the method may further comprise one or more of an analogue to digital converter, a signal amplifier / programmable gain amplifier, an antialiasing filter, a memory arranged to make an acoustic signal recording of acoustic signals propagating in the flow tube along with the one or more acoustic transducers. The acoustic signal recording may be controlled by the processor or a microcontroller. The acoustic signal recordings as well as the training acoustic signals recordings may all be digital acoustic signal recordings / digital training acoustic signals recordings respectively. Further the method may comprise a step of transmitting the meta data via the meter reading system to the metering system.

Optionally the method according to the second aspect of the invention comprises a step of calculating in the water meter the total energy for each of a plurality of acoustic signal recordings and selecting the acoustic signal recording with the lowest total energy or selecting an acoustic signal recording from a group of the 50%, or preferably 25% or more preferably 10% of the plurality of acoustic signal recordings with the lowest total energy, and inputting the selected acoustic signal recording to the pre-trained machine learning model to generate an output indicative of the selected acoustic signal recording including acoustic signals originating from a leak in the water distribution system. Since the energy of acoustic signals generated from a leak in the distribution system is normally expected to be almost constant selecting from the plurality of acoustic signal recordings the acoustic signal recording with a lowest total energy has the effect of selecting a record which comprises a low level of signal from ambient acoustic sources i.e. sources other than a leak. Hereby the detection of leaks becomes more reliable.

Optionally the method according to the second aspect of the invention comprises a step of calculating in the water meter the total energy for each of a plurality of acoustic signal recordings and selecting the acoustic signal recording with the lowest total energy or selecting an acoustic signal recording from the group of the 50% or preferably 25% or more preferably 10% of the plurality of acoustic signal recordings with the lowest total energy, and if the calculated total energy of the selected acoustic signal recording is above an analysis threshold inputting the selected acoustic signal recording to the pre-trained machine learning model to generate an output indicative of the selected acoustic signal recording including acoustic signals originating from a leak in the water distribution system. Preferably the method comprises a step of calculating in the water meter the analysis threshold at least partly based on a number of historic analysis thresholds and / or a number of historic total energy calculations. Alternatively, the analysis threshold may be predetermined or a received from the metering system.

Optionally the method according to the second aspect of the invention comprises a step of transmitting to at least a part of the plurality of water meters, via the one or more communication interfaces, from an external manufacturing system or an external metering system, the pre-trained machine learning model or parameters for partly updating the pre-trained machine learning model. Preferably the pre-trained machine learning model is received form an external system in the form of a configuration system, a manufacturing system, a metering system or a meter reading system.

Optionally the method according to the second aspect of the invention comprises a step of transmitting from the water meter to the metering system the output of the machine learning model and/or the acoustic signal recording and/or the meta data or a step of transmitting the output of the machine learning model and/or the acoustic signal recording and/or the meta data to the metering system if the output of the machine learning model exceeds a threshold.

In a third aspect a method for collecting data from a battery-operated utility meter for training and/or for use or analysis in a machine learning model is provided, the method comprising the steps of: -measuring in the utility meter a physical quantity with a predetermined sampling rate to create a discrete-time signal representation of the physical quantity; -storing the discrete-time signal in a memory of the utility meter; -transmitting from the utility meter via a meter reading system the discrete-time signal to a metering system autonomously or based on a request for data from the metering system; -in the metering system inputting the discrete-time signal to the machine learning model for training the machine learning model and/or for processing the discrete-time signal by the machine learning model.

The third aspect and all optional features related to the third aspect may be practiced alone or be incorporated in or combined with the method according to the second aspect of the invention. The third aspect is advantageous in that a data channel suitable for collecting training data from utility meters for training artificial intelligence such as a Machine Learning (ML) model is established. The utility meter according to the third aspect may be a water meter, a gas meter, an energy meter, a heat meter, a heat cost allocator, or any other meter for measuring consumption of a utility delivered by a utility network to a consumption site. The physical quantity may be an acoustic signal, temperature, flow, volume, power, pressure, turbidity, chemical content, voltage, current, battery discharge, humidity or any other physical quantity of the supplied utility or the utility meter. Especially the discrete-time signal may optionally be an acoustic signal recording according to the first or second aspect of the invention. By a discrete time signal is understood a digitally sampled version of a continuous-time (analogue) signal, such as sampling of flow, pressure, volume, temperature, sound i.e. acoustic signals or other physical quantities with regular intervals.

Optionally the method according to the third aspect, further comprises a step of calculating a parameter of the discrete-time signal and autonomously transmitting the parameter to the metering system or autonomously transmitting the discrete-time signal to the metering system if the parameter exceeds a threshold. This is especially advantageous in that the discrete-time signal only is transmitted autonomously if the threshold is exceeded or requested by the system if a system threshold is exceeded, whereby the energy of the battery is preserved, and the bandwidth of the meter reading system is preserved and congestion in the communication network is avoided. Optionally the calculated parameter is a power, a total energy, a peak value, a variation, or a dominant Fourier component of the discrete-time signal.

Optionally the method of the third aspect may comprise a step of sending a request for data from the metering system to the utility meter. Optionally, the transmission of the request from the metering system is triggered by a user input or by a result of an evaluation of a parameter or a discrete-time signal received from the utility meter. Optionally, the method may further comprise a step of generating in the metering system a request for a discrete-time signal from the utility meter where the request comprises one or more of the following parameters: one or more physical quantities to be measured, the predetermined sampling rate, number of samples, sampling start time. This is advantageous because only desired physical quantities are requested, and the sampling of the physical quantity may be adapted to a specific purpose. Especially, it is advantageous that the request specifies the sampling start time whereby the sampling or recording of the discrete-time signal may be synchronized across a plurality of utility meters. Hereby discrete-time signals from more than one utility meters may be correlated or processed together to improve the signal processing and certainty of an output from a ML model.

Optionally the method of the third aspect further comprises a step of compressing the discrete-time signal before storing the discrete-time signal in the memory or before transmitting the discrete-time signal to the metering system, whereby memory for data storage is saved and energy for transmission of data is reduced. Optionally the discrete-time signal is compressed using a lossy compression algorithm. Lossy compression algorithms will often provide a higher degree of compression compared to lossless compression which is normally used in metering applications. However, inference made by ML models will in many cases remain accurate despite some degree of loss of information in the discrete-time signal due to compression. Optionally the step of compressing the discrete-time signal includes one or more of the following: run-length encoding of the discrete-time signal; bit packing of the discrete-time signal; differentiation of the discrete-time signal; filtering of the discrete-time signal to remove changes below a threshold in the signal; frequency domain compression; compression based on fast Fourier transformation; compression based on wavelet transformation; projection of the discrete-time signal to 8-bit values using a logarithmic scale.

Optionally the physical quantity according to the third aspect is flow or volume and the machine learning model is trained for disaggregation of consumption data. By disaggregation of data is understood that by inference of the ML model a volume of water consumed by different appliances is estimated by the ML model. If the physical quantity is volume or flow the sampling rate may preferably be in the range of 10 mHz to 1000 mHz (milli Herz). The very low sampling rate is sufficient for disaggregation and conserves energy of the battery by limiting the need for data communication.

Optionally the physical quantity according to the third aspect is acoustic signals and the machine learning model is trained for detection of leaks in a utility network. If the physical quantity is acoustic signals the sampling rate is preferably in the range of 500 Hz - 6kHz. This is sufficient since the acoustic signals originating from a leak in especially a water distribution system typically has dominant frequencies below 3 kHz. Even though the leak as such may generate frequency components above 3 kHz such signals will, when travelling through the distribution system, be attenuated due to a low pass filtering effect of the distribution network.

Optionally the physical quantity according to the third aspect is temperature and the machine learning model is trained for estimation of heat loss in district heating systems. Alternatively, the physical quantity according to the third aspect is temperature and flow and the machine learning model is trained for estimation of heat loss in district heating systems. Especially in relation to estimation of heat loss and other temperature dynamics in fluid distribution systems those two physical quantities are descriptive for the system and are important for correct inference of e.g. heat loss by the ML model.

In a fourth aspect is provided a method for operating a machine learning model in a utility metering system comprising a utility meter, a meter reading system and a metering system, the method comprising the steps of: -measuring in the utility meter a physical quantity with a predetermined sampling rate to create a discrete-time signal representation of the physical quantity; -inputting in the utility meter the discrete-time signal to one or more algorithms for calculating one or more features of the discrete-time signal whereby a feature set is generated based on the output from the one or more algorithms; -transmitting from the utility meter via the meter reading system to the metering system the generated feature set, -in the metering system inputting the generated feature set to a machine learning model to train the model or to estimate a characteristic of the of the discrete-time signal.

The method according to the fourth aspect is advantageous in that only the feature set generated in the utility meter needs to be transmitted to the metering system whereas the discrete-time signal does not need to be transmitted. Further, the method is advantageous because the utility meter does not need to implement or execute a machine learning model, this is done in the metering system.

The fourth aspect and all optional features related to the fourth aspect may be practiced alone or be incorporated in the method according to the third aspect of the invention. The utility meter according to the fourth aspect may be a water meter, a gas meter, an energy meter, a heat meter, a heat cost allocator or any other meter for measuring consumption of a utility delivered by a utility network. The physical quantity may be an acoustic signal, temperature, flow, volume, power, pressure, turbidity, chemical content, voltage, current, battery discharge, humidity or any other physical quantity of the supplied utility or the utility meter. Especially the discrete-time signal may optionally be an acoustic signal recording as describes in relation to the first or second aspect of the invention.

Optionally the method according to the fourth aspect, further comprises a step of calculating a parameter of the discrete-time signal and autonomously transmitting the parameter to the metering system or autonomously transmitting the feature set to the metering system if the parameter exceeds a threshold. This is especially advantageous in that the feature set only is transmitted autonomously if the threshold is exceeded or requested by the system if a system threshold is exceeded, whereby the energy of the battery is preserved, and the bandwidth of the meter reading system is preserved and congestion in the communication network is avoided. Optionally the parameter is a power, a total energy, a peak value, a variation or a dominant Fourier component of the discrete-time signal

Optionally in the method according to the fourth aspect the physical quantity is an acoustic signal, and the machine learning model is trained to estimate if the discrete-time signal comprises a signal originating from a leak in a utility distribution network. Additionally, the feature set may comprise one or more of: signal power, a dominant FFT component, a peak amplitude, a first, second or third statistical moment.

Optionally in the method according to the fourth aspect the physical quantity is flow or volume and the machine learning model is trained for disaggregation of consumption. Additionally, the feature set may comprise one or more of: consumed volume, duration of consumption, time of consumption, maximum flow, minimum flow, flow variance.

Optionally in the method according to the fourth aspect the feature set further comprises meta data not calculated based on the discrete-time signal such as ambient temperature, water temperature, water pressure, type of sensor, absolute or relative time, flow rate.

Optionally in the method according to the fourth aspect the physical quantities are temperature and flow and the machine learning model is trained for estimation of heat loss in a district heating system.

Optionally the method according to the fourth aspect of the invention comprises a step of pre-screening the discrete-time signal in the utility meter and filtering away feature sets for discrete-time signals comprising acoustic signals which can be attributed to known ambient sources such as pumps, water heaters, district heating systems etc.

The individual aspects of the present invention may each be combined with any of the other aspects. These and other aspects of the invention will be apparent from the following description with reference to the described embodiments.

### BRIEF DESCRIPTION OF THE FIGURES

The Water meter and methods according to the invention will now be described in more detail with regard to the accompanying figures. The figures show one way of implementing the present invention and is not to be construed as being limiting to other possible embodiments falling within the scope of the attached claim set.
Figure 1 discloses a water meter with an embedded machine learning model;
Figure 2 illustrates a schematic overview of an exemplary water distribution system;
Figure 3 illustrates the basic elements in a request for specific signal recordings which shall be recorded by the water meter and transmitted to the metering system;
Figure 4 outlines the basic steps of a method for detection of leaks in a water distribution system;
Figure 5 outlines the basic steps of a method for operating feature-based Machine Learning in a utility metering context;
Figure 6a discloses acoustic signal recordings originating from ambient sources;
Figure 6b discloses acoustic signal recordings originating from leaks in a water distribution system.

### DETAILED DESCRIPTION OF AN EMBODIMENT

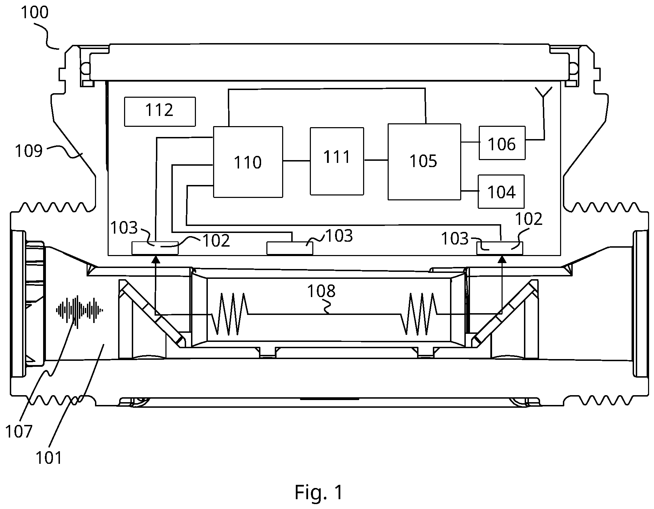

A first embodiment of the invention is now described with reference to fig. 1, illustrating a utility meter in the form of an ultrasonic water meter 100. The water meter comprises a flow tube 101 for being mechanical connected to a water distribution network via a threaded part of the flow tube or alternatively via flanges. The utility meter 100 comprises a closed meter housing 109 attached to the flow tube 101. Two flow transducers 102 in the form of piezo electric ultrasonic transducers 102 are arranged inside the meter house 109 on a wall of the flow tube 101 which passes through the meter housing 109. The piezoelectric ultrasonic transducers 102 are electrically connected to a measurement circuit 110. The processor unit 105 controls the measurement circuit 110 to transmit ultrasonic signals 108 through a wall of the flow tube 101 into the liquid in the flow tube 101 and to receive ultrasonic signals 108 having propagated through the liquid. Based on transit time and/or phase difference measurements of the ultrasonic signals 108 propagating through the liquid, the processor unit 105 can calculate the flowrate of the liquid. The ultrasonic signals 108 are received via the measurement circuit 110 and sampled with a sufficiently high sampling rate and converted to digital signals by an analogue to digital converter 111 before they are processed by the processor unit 105 for calculation of the flow rate.

The water meter 100 is arranged to make an acoustic signal recording of acoustic signals 107 propagating in the flow tube 101. The acoustic signals are propagating in the fluid inside the flow tube and/or in the wall of the flow tube. Due to the mechanical connection of the water meter 100 to the distribution network acoustic signals 107 will propagate from the pipes and fluid of the distribution network to the flow tube 101 and the fluid inside the flow tube. The water meter 100 may re-use the flow transducers 102 as acoustic transducers 103 for acoustic signal recording or optionally another dedicated acoustic transducer 103 may be included in the meter and used alone or in combination with the flow transducers for acoustic signal recording. The dedicated acoustic transducers may be an accelerometer, a piezo electric element, a hydrophone or another suitable type of acoustic transducer. Especially piezo electric ultrasonic transducers, but also other types of flow transducers, may be re-used as acoustic transducers for acoustic signal recording. Piezo electric transducers for ultrasonic flow measurement typically have a resonance frequency above the most relevant frequency range for acoustic signal recording, which is below 2 kHz, but they will still have a sufficient sensitivity in this frequency rage.

The flow transducers 102, the optional additional acoustic transducer 103, the measurement circuit 110, the analogue to digital converter 111, the processor unit 105, the communication interface 106, the battery 112 and other electronic components of the water meter are arranged inside the meter housing 109, which protects them from the environment, especially from humidity in the environment. The water meter is supplied with energy from a battery 112 arranged inside the meter housing.

The processor unit 105 controls the water meter including flow measurement and acoustic signal recording via the flow transducers 102 or via the optional acoustic transducer 103. The processor unit is connected to the transducers 102, 103 via the measurement circuit 110 and an analogue to digital converter 111. In an alternative embodiment the water meter may comprise more than one measurement circuit and/or analogue to digital converter which are individually optimized for flow measurement and acoustic signal measurement respectively. The measurement circuit 110 comprises amplifiers and anti-aliasing filters. The processor unit 105 uses internal and external memory 104 for storing acoustic signal recordings, measurement data and the pre-trained ML model. The processor unit 105 executes the pre-trained ML model. The processor unit may be understood as a logical unit comprising several physical processing units or processor cores.

The communication interfaces 106 is a cellular communication module in the form of a NB-IOT communication interface but several other communication interfaces may be used such as interfaces supporting LTE, LTE cat. M1, 2G, 3G, 4G, 5G, 5G RedCap, LoRa, MBus or proprietary communication. Further, the water meter comprises a communication interface for programming and configuration of the processing unit during production in the form of a JTAG programming interface.

The processor unit controls the water meter to transmit data e.g. comprising consumption data to a metering system with fixed or variable intervals. The data transmitted to the metering system may also include outputs from the machine learning (ML) model i.e. the result of inference by the ML model, parameters calculated based on the recorded signals as well as acoustic signal recordings and meta data. The processor unit calculates the parameters and store meta data along with the acoustic signal recording or the output from the pre-trained machine learning model.

The water meter operates in a normal state of operation, where predefined daily, hourly, weekly and monthly data are transmitted regularly. To preserve battery power some of these data may be highly distilled e.g. by calculating various statistical parameters e.g. mean, maximum, minimum, variation, sum etc. The granularity of the data is therefore reduced, and the data is inadequate for inference by ML models or training of ML models. To overcome this, granular data can be obtained from the water meter on a request basis. This allows the water meter to only accumulate and transmit granular data on "need-to-know" basis, and a subset of meters deemed of particular importance can be selected for recording and transmitting acoustic signal recordings. As an example, a full sample acoustic signal recording may be requested when an indicative marker, e.g. an acoustic signal power, indicates that a particular meter is of particular interest. The selection of meters of interest may be made manually by a utility worker or automatically by the metering system that identifies a subset of meters as meters-of-interest.

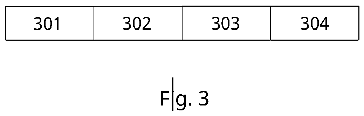

The water meter is arranged to receive a request for specific signal recordings which shall be recorded by the water meter and transmitted to the metering system. Fig. 3 illustrates the basic elements in a request. The request is embedded in a data packet of the communication protocol used by the communication interface and protected by the security mechanisms included in that protocol including authentication and protection of data integrity. The request includes a time reference field 301, a sampling rate field 302, a number of measurements field 303 and one or more data fields 304. The time reference field 301 carries a point in time for making the signal recording. The point in time can be an absolute point in time referring to a real time clock in the water meter or a relative time point relating to e.g. to a specific frame number or beacon in the communication infrastructure or the data packet carrying the request. Hereby signal recording may be synchronized across a population of water meters or be directed towards recording of an expected event in the utility distribution system. The sampling rate defined by the sampling rate field 302 is the sampling rate for the analogue to digital converter or simply a measurement interval. The number of measurements field 303 carries the number of samples to include in the signal recording and optionally a number of repeated signal recordings. The data field 304 defines the physical data to be measured and sampled into the signal recording such as acoustic signal, temperature, flow, pressure or other physical parameters.

The water meter can transmit autonomously or based on abovementioned request acoustic signal recordings or other signal recordings to the metering system. Hereby a data channel for collecting the required data for training of machine learning models is created. In the metering system the data is used for training of artificial intelligence such as machine learning models or analysed by the same models.

The water meter comprises algorithms for compressing the signal recordings before they are transmitted to the metering system. Depending on the physical data being recorded the water meter can apply different compression algorithms. The compression may be lossless or lossy depending on the type of data and the requirements on data quality. In the following are listed different methods of compression which are included in the water meter.

Differentiation of data to create a stream of changes or delta values is used for compression of data. This is for example efficient for signal recordings of physical data such as volume but may also be used for compression of other measurements such as temperature. After the differentiated volume data has been transmitted to the metering system it may be integrated into a volume in the metering system. A normal volume is 9 digits (typically used on meter displays), which requires a 32bit integer for being represented can when differentiated be accommodated in a 16bit representation, which results in a 50% compression.

The signal recording may be filtered to remove small changes. A filter that suppresses small changes and lets larger changes pass, such as a running average filter or a low pass filter for removing fast changes and spikes. Alternatively, total variation denoising may be used for filtering the signal recording. The filter may be used with different constants to optimize the compression of data. Such a filter reduces the data content in the signal and is thus an element in a lossy compression. The filter is preferably followed by other compression algorithms which will have an improved performance on the filtered signal compared to an unfiltered signal.

The water meter comprises an algorithm for run-length encoding. This is a highly effective method for data that changes in steps. Continuous changes might compress less efficiently. Further data may be projected to 8-bit values using logarithmic scale. Bit packing may also be used for data compression. The different compression methods lossy as well as lossless may be combined to achieve an optimal compression of data.

The pre-trained machine learning model is a is a Fully Convolutional Neural Network (FCNN) with 3 convolutional layers with 64 filters and a kernel size of 3, followed by a Global Average Pooling layer and a Dense Layer. This model requires no preprocessing of the data. The output of the model is a probability for belonging to one or more classes, where the probabilities add to 100 %. The signal recordings are inputted to the pre-trained model and based on inference by the pre-trained ML model the signal recording is assigned to whichever class has a probability larger than 50 %. The model is pre-trained to discriminate signal recordings comprising acoustic signals originating from a leak in a water distribution network from signal recordings not comprising such acoustic signals. It is understood by the skilled person that other types and classes of ML models may be pre-trained and used according to this invention.

The pre-trained ML model is built in Tensorflow and is compiled to Tensorflow Lite which is suitable for operation on a microprocessor as typically used in utility meters such as water meters. The resource budget for storing and evaluating the model on a microprocessor such as EFR32BG24 is 38 kB flash, 67 kB RAM, execution time at 78 MHz clock rate for one inference is 612 ms with a total energy consumption of 9.1 mJ. If a 3.6 V energy source is used and a single inference is made each day the average current used for inference will be 30 nA which is within a reasonable energy budget for a battery-operated water meter. As an alternative the ML model may be converted to a TinyML model which is also suitable for being deployed in a utility meter such as a water meter. Alternative micro processors such as the STM32 series may also be used for implementing the solution.

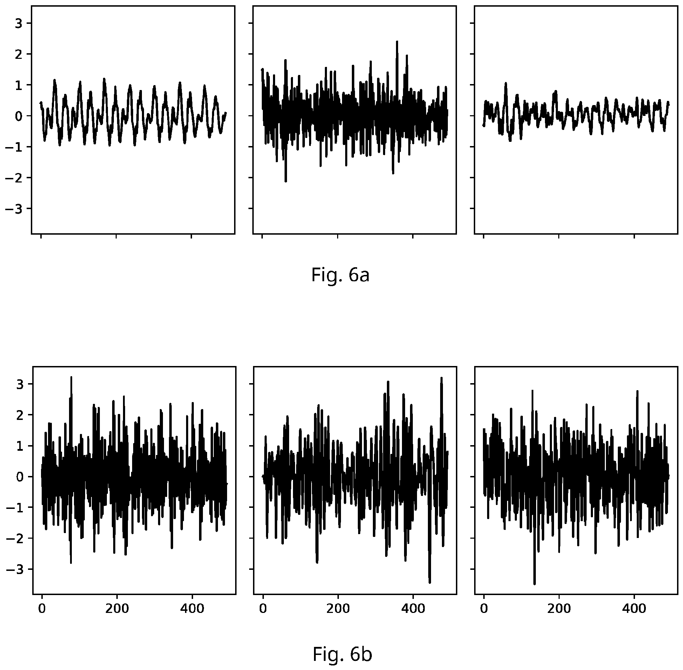

The ML model has been trained on training data comprising acoustic signal recordings made by deployed water meters i.e. water meters installed in utility distribution networks. Signal recordings made by water meters installed at locations within acoustical range of leaks in the utility distribution network have been labelled as comprising acoustic signal recordings comprising signals generated by a leak in a utility distribution network. The training data also comprises acoustic signal recordings made by water meters not installed at locations within acoustical range of leaks but within range of ambient noise sources such as pumps, district heating, machinery and other noise sources. The trained ML model will classify acoustic signal recordings as belonging to the ambient class where no leak sound is present or the leak class where leak sound is present. Additionally, the ML model may be trained on isolated acoustic signal recordings from known common ambient noise sources such as pumps, district heating systems, valves, water boilers, household appliances etc. Fig. 6a and 6b shows three examples from each class of recordings. The individual sound recordings have a size of 492 samples each sampled at 2048 Hz. Fig. 6a. show acoustical recordings originating from an ambient source whereas fig. 6b show acoustical signals originating from leaks in a water distribution system.

The first embodiment is disclosed in the form of a utility meter which in this case is a water meter. It is understood that the utility meter described in the first embodiment could as well be an energy meter, a gas meter, a district heating meter or any other meter for measuring consumption related to a fluid delivered via a utility distribution network.

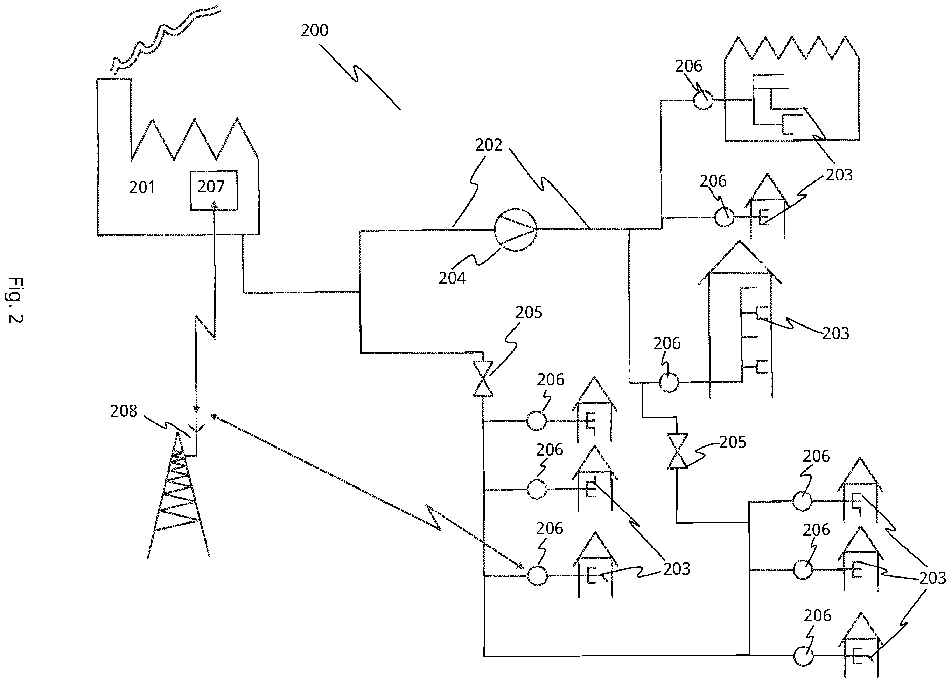

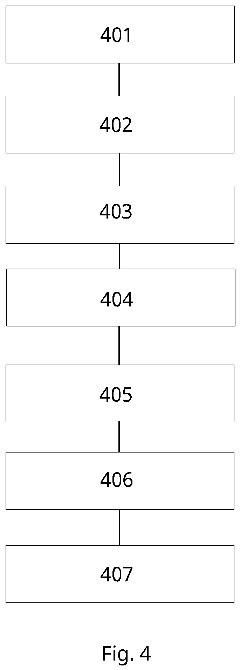

A second embodiment is now described with reference to fig. 4. The second embodiment is a method for detection of leaks in a water distribution system as illustrated in fig. 2. The utility distribution system 200 illustrated in fig 2 discloses a utility producer 201 supplying a utility such as water or district heating via a utility distribution network comprising pipes 202, pumps 204, valves 205, utility meters 206. The utility meters 206 are arranged at the peripheral part of the utility distribution system 200 for measuring the amount of utility consumed at each consumption site 203. The utility meters 206 are arranged to communicate with a metering system 207 via a meter reading system 208. The meters are mechanically connected to the pipes 202 and acoustic signals travelling in the pipes or the fluid inside the pipes will be mechanically coupled to the flow tube of the utility meters which will be able to record the acoustic signals via an acoustic transducer. The utility meters 206 may be water meters as described in the first embodiment. The meter reading system 208 may be a standard meter reading system as known in the art and as described in the first embodiment.

In a first step 401 the utility meters 206 make an acoustic signal recording of the acoustic signals travelling through the flow tube. The acoustic signal recording may be used for inference by a pre-trained ML model in the utility meter and/or it may be used for training of ML model in the metering system.

In a second step 402 the plurality of utility meters transmits acoustic signal recordings to the metering system for the purpose of training the ML model. It is understood by the skilled person that not all utility meters must transmit acoustic signal recordings for training purposes and that a ML model may be trained on acoustic signal recordings from more than one utility distribution system.

In a third step 403 it is determined that some of the received acoustic signal recordings include acoustic signals originating from a leak in a water distribution system. This may be determined based on investigations at the consumption site or based on the fact that a leak has been found at a consumption site. This step may include manually inspection of consumption sites and the distribution network to determine that a leak is present. Another alternative for detection of the leaks is to use alternative mobile leak detection equipment for determining the presence of a leak. A leak may also be detected based on manually or automized analysis of the acoustic signal recordings optionally in combination with an inspection of the consumption site. When a leak has been detected and an acoustic signal recording has been made, the digitized acoustic signal recording is labelled to identify that the acoustic signal recording includes acoustic signals from a leak and the signal recording is added to an acoustic signal training set. The labelling of the acoustic signal is done in meta data of the signal recording.

In a fourth step 404 it is determined that some of the acoustic signal recordings do not include signals originating from a leak in the water distribution system. This may be determined based at investigations at the consumption site e.g. by determining the presence of an alternative ambient acoustic signal source such as a pump, a boiler, a district heating system, a heat pump, a water softener or other sources. This step may also include manually inspection of consumption sites and the distribution network to determine that no leak is present. Manual or automized analysis of the acoustic signal recordings optionally in combination with an inspection of the consumption site is also used to determine that the acoustic signal recording does not include acoustic signals originating from a leak. Finally, the digitized acoustic signal recording is labelled to identify that the acoustic signal recording does not include acoustic signals from a leak and the signal recording is added to the acoustic signal training set. The labelling of the acoustic signal is done in meta data of the signal recording. Additionally, the acoustic signal recording may be labelled with information about the source of the acoustic signals comprised in the recording e.g. pump, boiler, district heating system, heat pump, water softener or other sources.

In a fifth step 405, a Machine Learning model is trained on the acoustic signal training set, whereby a pre-trained ML model is obtained. Training of the ML model is done in a system outside the utility meter e.g. in a metering system or a system of the meter manufacturer. The ML model is trained to discriminate acoustic signal recordings including acoustic signals originating from a leak in the water distribution system from acoustic signal recordings not including acoustic signals originating from a leak in the water distribution system. Additionally, the ML model may be trained to determine one or more ambient sources other than a leak in the water distribution system as the sources of the acoustic signal. Such an ambient sources may be a pump, a boiler, a district heating system, a heat pump, a water softener or another source. The ML model is one of the models described in connection with the first embodiment.

In a sixth step 406 the pre-trained machine learning model is transferred to the utility meter. This may be done in a production environment at a factory site or configuration site e.g. via a programming interface such as JTAG. Alternatively, the pre-trained ML model is transferred to the meter via a metering system / meter reading system preferably after the meter has been installed at a consumption site. Typically, a first version of the ML model is transferred to the meter during the manufacturing process and then an updated second version may be transferred to the utility meter after deployment at a consumption site.

In a seventh step 407, acoustic signal recordings are inputted to the pre-trained ML model in the utility meter. Based on inference by the ML model an output is generated which indicates a probability of the acoustic signal recording comprising acoustic signals originating from a leak in the water distribution system. Additionally, based on inference by the ML model an output indicating the probability of one or more ambient sources of acoustic signals in the water distribution system may be comprised in the output from the ML model. Such an ambient sources may be a pump, a boiler, a district heating system, a heat pump, a water softener or another source.

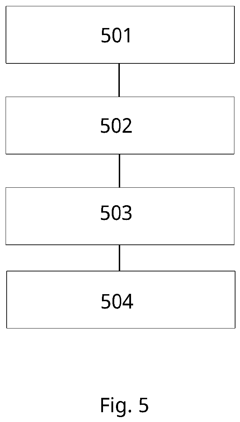

In a third embodiment is disclosed a method for operating feature-based Machine Learning (ML) in a utility metering context. A utility meter such as a water meter as described in the first embodiment further comprises an algorithm for calculating a feature set based on a discrete-time signal. This feature-set provides the data required for inferring in the metering system special events or properties of the utility distribution system. The method of the third embodiment is now described with reference to fig. 5.

In a first step 501 of the method the utility meter measures a physical quantity to create a discrete-time signal representation of the physical quantity. The utility meter may be a water meter, a gas meter, an energy meter, a heat meter, a heat cost allocator or any other meter for measuring consumption of a utility delivered by a utility network. The utility meter comprises one or more sensors for measuring an acoustic signal, temperature, flow, volume, power, pressure, turbidity, chemical content, voltage, current, battery discharge, humidity or any other physical quantity of the supplied utility or the utility meter. The output from the sensor is sampled with a sampling rate which may be preconfigured or requested by the metering system.

In a second step 502 the discrete-time signal is processed in a processor of the utility meter to calculate a feature-set. The processor uses standard algorithms to calculate features like signal power, dominant FFT components, peak amplitude, first, second or third statistical moment, consumed volume, duration of consumption, time of consumption etc.

In a third step 503 the generated feature set is transmitted from the utility meter to the metering system via a standard meter reading system as disclosed in connection with the first and second embodiments.

In a fourth step 504 the generated feature set is inputted to a ML model to train the model or to estimate by inference a characteristic of the discrete-time signal.

A feature based ML implementation for consumption / flow disaggregation is obtainable with the abovementioned method. A trained model in the metering system is capable of identifying consumption events.

The feature set generated by the algorithms in the meter comprises information characterizing each consumption event. The information could be one or more of consumed volume, duration of consumption, time of day, maximum flow, minimum flow, flow variance etc. Volume and duration of consumption will be sufficient for most use cases since those features carries a lot of information. The inventors have found that a normal consumption site has 50-100 daily events and using this approach sufficient information regarding consumption for e.g. disaggregation could be reduced to features with a total data size of 200-400 bytes for 24 hours. Those features are transmitted to the metering system where they are fed into an AI model such as an ML model whereby consumption events can be categorized according to the consuming appliance such as toilets, washing machines, dishwasher, outdoor irrigation etc. hereby the consumption is disaggregated. Especially in the case of coinciding or multi events a ML model will be required to provide a robust detection method.

In the metering system the ML model is based on a random forest algorithm, but alternative algorithms may be used. The decision trees in the metering system may be changed without the need for updating the feature generating algorithms in the meter. In a two-way scenario it will be possible to make the meter calculate a new feature-set to improve the reliability of the inference made by the ML model in the metering system.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.
- 100: Water meter
- 101: Flow tube
- 102: Flow transducer
- 103: Acoustic transducer
- 104: Memory
- 105: Processor unit
- 106: Communication interface
- 107: Acoustic signal
- 108: Ultrasonic signal
- 109: Meter housing
- 110: Measurement circuit
- 111: Analogue to digital converter
- 112: Battery

- 200: Utility distribution system
- 201: Utility producer
- 202: Pipe
- 203: Consumption site
- 204: Pump
- 205: Valve
- 206: Utility meter
- 207: Metering system
- 208: Meter reading system

- 301: Time reference field
- 302: Sampling rate field
- 303: Number of measurements field
- 304: Data field

- 401-407: Methods steps
- 501-504: Methods steps

## Claims

1. A water meter (100) comprising:
- a flow tube (101) arranged for being mechanically connected to a water distribution system;
- one or more flow transducers (102) arranged for measuring a flow of water through the flow tube;
- one or more acoustic transducers (102, 103) arranged to make an acoustic signal recording of acoustic signals (107) propagating in the flow tube;
- a memory (104) for storing a machine learning model;
- a processor unit (105) for executing the machine learning model; and
- one or more communication interfaces (106) for communication with one or more at least one system external to the water meter,
**characterized in that**:
- the water meter is arranged to receive via the one or more communication interfaces (106), from an external manufacturing system or an external metering system, a pre-trained machine learning model, where
- the pre-trained machine learning model has been trained to discriminate acoustic signal recordings including acoustic signals originating from a leak in the water distribution system from acoustic signal recordings not including acoustic signals originating from a leak in the water distribution system, and where
- the pre-trained machine learning model has been trained on multiple training acoustic signal recordings, and where
- at least some of the multiple training acoustic signal recordings include and are labelled as including acoustic signals originating from a leak in a water distribution system and the remaining training acoustic signal recordings do not include acoustic signals originating from a leak in a water distribution system;
- and the water meter is further arranged to with regular or irregular intervals make an acoustic signal recording of the acoustic signals (107) propagating in the flow tube (101) and input the acoustic signal recording to the pre-trained machine learning model to generate an output indicative of the acoustic signal recording including acoustic signals originating from a leak in the water distribution system.

2. Water meter according to claim 1 wherein the output from the pre-trained machine learning model comprises a value proportional to a probability of the acoustic signal recording including an acoustic signal originating from a leak in the water distribution system and/or a value proportional to a probability of the acoustic signal recording including an acoustic signal originating from an ambient noise source.

3. Water meter according to any of the preceding claims wherein at least some of the training acoustic signal recordings include an acoustic signal originating from an ambient noise source such as a pump, a boiler, a district heating system, a heat pump, a water softener or other sources.

4. Water meter according to any of the preceding claims wherein the machine learning model is configured to classify the acoustic signal recordings as including an acoustic signal originating from one or more classes or sources such as leaks in the water distribution system, valves, pumps, boilers, district heating systems, heat pumps, water softeners or other ambient sources.

5. Water meter according to any of the preceding claims wherein the acoustic signal recording made with regular or irregular intervals by the water meter comprises less than 2000 samples and is sampled with a sampling rate of less than 6000 Hz.

6. Water meter according to any of the preceding claims wherein the water meter is arranged to store meta data along with the acoustic signal recording or the output from the pre-trained machine learning model, where the meta data is one or more of a timestamp indicating the time of recording the acoustic signal, a flow rate during the acoustic signal recording, a temperature during the acoustic signal recording, the total signal energy of the acoustic signal recording, an FFT analysis of the acoustic signal recording, a second or third statistical moment of the acoustic signal recording or a fluid pressure during the acoustic signal recording.

7. Water meter according to any of the preceding claims wherein the water meter further is arranged to calculate the total energy for each of a plurality of acoustic signal recordings and to select the acoustic signal recording with the lowest total energy or to select an acoustic signal recording from a group of the 50% of the plurality of acoustic signal recordings with the lowest total energy, and to input the selected acoustic signal recording to the pre-trained machine learning model to generate an output indicative of the selected acoustic signal recording including acoustic signals originating from a leak in the water distribution system.

8. Water meter according to any of the preceding claims wherein the water meter is arranged to calculate the total energy for each of a plurality of acoustic signal recordings and to select the acoustic signal recording with the lowest total energy or to select an acoustic signal recording from the group of the 50% of the plurality of acoustic signal recordings with the lowest total energy, and if the calculated total energy of the selected acoustic signal recording is above an analysis threshold to input the selected acoustic signal recording to the pre-trained machine learning model to generate an output indicative of the selected acoustic signal recording including acoustic signals originating from a leak in the water distribution system.

9. Water meter according to any of the preceding claims wherein the water meter is arranged to receive via one of the one or more communication interfaces parameters for partly updating the pre-trained machine learning model.

10. A method for detecting leaks in one or more water distribution systems comprising a plurality of pipes for distributing water to a plurality of consumption sites, a plurality of water meters arranged for measuring water consumption at the plurality of consumption sites, a metering system for handling data from the water meters and a meter reading system arranged to provide a communication channel between the plurality of water meters and the metering system,
said water meters each comprising:
- a flow tube mechanically connected to a pipe of the water distribution system;
- one or more flow transducers arranged for measuring a flow of water through the flow tube;
- one or more acoustic transducers arranged to make an acoustic signal recording of acoustic signals propagating in the flow tube,
- a memory for storing a machine learning model;
- a processor unit for executing the machine learning model; and
- one or more communication interfaces for communication with the meter reading system and/or one or more systems external to the water meter,
the method comprising the steps of:
- recording (401) in one or more of the plurality of water meters, with regular or irregular intervals, an acoustic signal recording of the acoustic signals propagating in the flow tube;
- transmitting (402) from the plurality of water meters of the one or more water distribution systems to the metering system via the meter reading system a plurality of acoustic signal recordings;
- determining (403) that some of the acoustic signal recordings received in the metering system do include acoustic signals originating from a leak in a water distribution system, labelling the acoustic signal recording accordingly and including the acoustic signal recording in an acoustic signal training set;
- determining (404) that some of the acoustic signal recordings received in the metering system do not include acoustic signals originating from a leak in a water distribution system, labelling the acoustic signal recording accordingly and including the acoustic signal recording in the acoustic signal training set;
- training (405) in the metering system a machine learning model on the acoustic signal training set to discriminate acoustic signal recordings including acoustic signals originating from a leak in the water distribution system from acoustic signal recordings not including acoustic signals originating from a leak in the water distribution system whereby a pre-trained machine learning model is obtained;
- transmitting (406) to at least a part of the plurality of water meters, via the one or more communication interfaces, from an external manufacturing system or an external metering system, the pre-trained machine learning model;
- in the water meter inputting (407) one or more acoustic signal recording to the pre-trained machine learning model and generating an output indicative of the acoustic signal recording including acoustic signals originating from a leak in the water distribution system.

11. Method according to claim 10 wherein the output from the pre-trained machine learning model comprises a value proportional to a probability of the acoustic signal recording including an acoustic signal originating from a leak in the water distribution system and/or a value proportional to a probability of the acoustic signal recording including an acoustic signal originating from an ambient noise source.

12. method according to any of claims 10-11 wherein the acoustic signal training set comprises an acoustic signal recording including an acoustic signal originating from an ambient noise source such as a pump, a boiler, a district heating system, a heat pump, a water softener or other sources.

13. Method according to any of claims 10-12 further comprising a step of storing in the water meter meta data along with the acoustic signal recording or along with the output from the pre-trained machine learning model, where the meta data is one or more of a timestamp indicating the time of recording the acoustic signal, a flow rate during the acoustic signal recording, a temperature during the acoustic signal recording, the total signal energy of the acoustic signal recording, an FFT analysis of the acoustic signal recording, second or third statistical moment of the acoustic signal recording, a fluid pressure during the acoustic signal recording.

14. Method according to any of claims 10-13 comprising a step of calculating in the water meter the total energy for each of a plurality of acoustic signal recordings and selecting the acoustic signal recording with the lowest total energy or selecting an acoustic signal recording from a group of the 50% of the plurality of acoustic signal recordings with the lowest total energy, and inputting the selected acoustic signal recording to the pre-trained machine learning model to generate an output indicative of the selected acoustic signal recording including acoustic signals originating from a leak in the water distribution system.

15. Method according to any of claims 10-14 comprising a step of calculating in the water meter the total energy for each of a plurality of acoustic signal recordings and selecting the acoustic signal recording with the lowest total energy or selecting an acoustic signal recording from the group of the 50% of the plurality of acoustic signal recordings with the lowest total energy, and if the calculated total energy of the selected acoustic signal recording is above an analysis threshold inputting the selected acoustic signal recording to the pre-trained machine learning model to generate an output indicative of the selected acoustic signal recording including acoustic signals originating from a leak in the water distribution system.
